# EUROPÄISCHE PATENTSCHRIFT

(11) **EP 0 643 814 B1**
(45) Veröffentlichungstag und Bekanntmachung des Hinweises auf die Patenterteilung: **16.04.1997**
(21) Anmeldenummer: 93909796.0
(22) Anmeldetag: 26.05.1993
(51) Int. Cl.: F16K 37/00

(54) **VERFAHREN UND EINRICHTUNG ZUR PRÜFUNG EINER DURCH EIN MEDIUM ANGETRIEBENEN ARMATUR**
PROCESS AND DEVICE FOR TESTING A FITTING OPERATED BY A MEDIUM
PROCEDE ET DISPOSITIF VISANT A VERIFIER UNE GARNITURE ACTIONNEE PAR UN MILIEU

(30) Priorität: 03.06.1992 DE 4218320
(43) Veröffentlichungstag der Anmeldung: 22.03.1995
(73) Patentinhaber: SIEMENS AKTIENGESELLSCHAFT, 80333 München (DE)
(72) Erfinder: SCHMITT, Wilfried, D-6233 Kelkheim (DE); BUTKEREIT, Werner, D-8521 Weisendorf (DE)
(86) Internationale Anmeldenummer: DE9300462
(87) Internationale Veröffentlichungsnummer: WO9324779

(56) Entgegenhaltungen:
- DE-A- 3 703 535
- FR-A- 2 524 603
- US-A- 4 029 122
- US-A- 4 274 438
- US-A- 4 896 101
- US-A- 4 976 144

## Beschreibung

Die Erfindung betrifft Verfahren zur Prüfung einer durch ein Medium angetriebenen Armatur, die ein Schließorgan aufweist, insbesondere einer pneumatisch oder hydraulisch angetriebenen und/oder eigenmediumgesteuerten Armatur, wobei während eines Schaltvorgangs der Armatur als Istzustand die zeitlichen Verläufe einer systemrelevanten und einer armaturenrelevanten Meßgröße gemessen werden. Die Erfindung Detrifft auch Einrichtungen zur Prüfung einer solchen Armatur.

Eine derartige Armatur zeichnet sich dadurch aus, daß ihre Spindel und damit ihr Ventilteller durch die Druckeinwirkung eines Mediums bewegt werden.

Um die Funktionsfähigkeit einer derartigen Armatur zu überprüfen, wurden bisher häufig einfache visuelle Inspektionen vorgenommen. Es wurden außerdem Ventile, die sich in Leitungen für die Zufuhr des Antriebsmediums zur Armatur befinden, vorbeugend gewartet.

Aus der US 4 274 438 ist ein Diagnoseverfahren für eine Armatur bekannt. Dabei wird bei bestimmten Stellungen des Schließorgans der Armatur der Mediumdruck in der Armatur gemessen. Danach erfolgt eine Mittelwertbildung mehrerer zuvor gemessener Druckwerte. Diese Mittelwerte sollen einen Hinweis auf den Zustand der Armatur geben.

Eine derartige Überwachung eines mittleren Druckwertes ermöglicht keine ausreichend genaue Prüfung einer Armatur. Relativ kleine Fehler werden nicht erkannt.

Der Erfindung lag die Aufgabe zugrunde, Verfahren zur Prüfung einer durch ein Medium angetriebenen Armatur anzugeben, die eine schnelle und sichere Erfassung mindestens eines relevanten Parameters als Bewertungsmaßstab für den Zustand der Armatur gewährleisten. Dadurch soll eine Prüfung der Armatur während sie in Betrieb ist, möglich sein. Es sollen außerdem geeignete Einrichtungen zur Prüfung einer durch ein Medium angetriebenen Armatur angegeben werden.

Die als erste genannte Aufgabe wird gemäß der Erfindung einerseits dadurch gelöst, daß aus den zeitlichen Verläufen eines Mediumdruckes in der Armatur als systemrelevante Meßgröße und eines Hubes des Schließorgans der Armatur als armaturenrelevante Meßgröße ein Hubfaktor der Armatur als funktionsspezifische Größe abgeleitet und als Basisgröße gespeichert wird, der ein Quotient aus zwei Mediumdrücken, die für zwei Stellungen des Schließorgans (Hübe) bestimmt worden sind, ist, daß während eines späteren Schaltvorgangs der Armatur der Hubfaktor in gleicher Weise erneut bestimmt und dessen Abweichung von der gespeicherten Basisgröße überwacht wird.

Der Istzustand wird dann festgelegt, wenn von einem ordnungsgemäßen Funktionieren der Armatur ausgegangen werden kann. Das kann unmittelbar nach dem Einbau einer neuen Armatur oder nach einer Wartung einer Armatur sein. Die Basisgröße ist eine im Istzustand bestimmte funktionsspezifische Größe. Zur späteren Prüfung der Armatur wird die gleiche funktionsspezifische Größe erneut bestimmt und mit der Basisgröße verglichen. Eine Abweichung von der Basisgröße gibt dann einen Hinweis auf einen möglichen Fehler in der Armatur. Mit dem Verfahren nach der Erfindung wird die funktionsspezifische Größe nicht direkt gemessen, sondern es werden zunächst die zeitlichen Verläufe mindestens einer systemrelevanten und einer armaturenrelevanten Meßgröße gemessen. Die funktionsspezifische Größe wird danach aus diesen zeitlichen Verläufen abgeleitet.

Beispielsweise wird für mehrere nacheinander erfolgende Schaltvorgänge jeweils die Abweichung des Hubfaktors von der zugeordneten Basisgröße bestimmt. Man erhält auf diese Weise eine Reihe aus Abweichungswerten. Es wird dann der Trend der Abweichungen überwacht. Sollten die Abweichungsbeträge größer werden, ist eine besonders genaue Überwachung geboten, ob der Betrag der tatsächlichen Abweichung den Betrag der tolerierbaren Abweichung überschreitet. Mit diesem Verfahren wird ausgeschlossen, daß eine singuläre geringe Abweichung zu einem Fehlersignal führt.

Die systemrelevante Meßgröße ist bei dem genannten Verfahren nach der Erfindung der Druck des die Armatur antreibenden Mediums. Es wird also während eines Schaltvorganges der Armatur der zeitliche Verlauf des Mediumdruckes gemessen. Bei einem Schaltvorgang löst der Druck des Mediums die Bewegung des Ventiltellers und der Spindel aus. Bei einem Öffnungsvorgang oder einem Schließvorgang der Armatur gibt es jeweils einen spezifischen Druckverlauf. Änderungen dieses Druckverlaufes können bereits auf eine fehlerhafte Armatur schließen lassen.

Die armaturenrelevante Meßgröße ist der Hub des Schließorgans der Armatur. Das Schließorgan kann die Kombination aus Spindel und Ventilteller sein.

Gemäß der Erfindung wird aus den zeitlichen Verläufen der systemrelevanten und der armaturenrelevanten Meßgröße eine funktionsspezifische Größe abgeleitet.

Diese funktionsspezifische Größe ist der Hubfaktor der Armatur. Der Hubfaktor beim Öffnungsvorgang ist der Quotient aus dem Druckanstieg des die Armatur antreibenden Mediums bis zum Ende des Öffnungsvorgangs und dem Druckanstieg des Mediums bis zum Beginn des Öffnungsvorgangs. Der Hubfaktor beim Schließvorgang ist der Quotient aus den Beträgen der Druckabnahme am Ende des Schließvorgangs und der Druckabnahme am Beginn des Schließvorgangs. Es brauchen also nur aus dem zuvor bestimmten zeitlichen Verlauf des Mediumdruckes die Druckanstiege und Druckabnahmen beim Beginn und beim Ende der Bewegung der Armaturenspindel und des Armaturentellers entnommen zu werden. Aus diesen Werten erhält man durch Division den Hubfaktor, der als unmittelbare funktionsspezifische Größe den Zustand der Armatur anzugeben gestattet.

Damit wird der Vorteil erzielt, daß eine Größe bereitgestellt wird, die bei Vergleich mit einer entsprechenden Basisgröße zuverlässig den Zustand der Armatur angibt. Statt des Hubfaktors können als funktionsspezifische Größe auch der Zeitraum zwischen einem Schaltvorgang einerseits und dem daraus folgenden Beginn des Druckanstieges oder Druckabfalles oder dem Beginn der Bewegung der Spindel andererseits dienen. Dieser Zeitraum wird mit Totzeit bezeichnet. Es können auch die Zeitspanne, die für die Bewegung der Spindel benötigt wird oder der gesamte Zeitraum für einen Druckaufbau oder Druckabbau als funktionsspezifische Größe bestimmt werden.

Mit dem Verfahren nach der Erfindung wird der Vorteil erzielt, daß die Prüfung einer durch ein Medium angetriebenen Armatur an einer in Betrieb befindlichen Armatur möglich ist. Es wird nämlich eine funktionsspezifische Größe überwacht. Es werden nicht nur Ventile überwacht. Das Verfahren nach der Erfindung kann automatisiert werden.

Die zuerst genannte Aufgabe wird andererseits dadurch gelöst, daß aus den zeitlichen Verläufen mindestens eine funktionsspezifische Größe abgeleitet und als Basisgröße gespeichert wird und daß für mehrere, spätere nacheinander erfolgende Schaltvorgänge der Armatur jeweils die Abweichung mindestens einer bestimmten funktionsspezifischen Größe von der zugeordneten Basisgröße bestimmt wird und daß der Trend der Abweichungen überwacht wird. Mit diesem Verfahren nach der Erfindung erhält man eine Reihe aus Abweichungswerten, aus denen der Trend der Abweichungen abgelesen werden kann. Sollten die Abweichungsbeträge größer werden, ist eine besonders genaue Überwachung geboten. Mit diesem Verfahren wird ausgeschlossen, daß eine singuläre geringe Abweichung zu einem Fehlersignal führt. Wenn der Trend einen Fehler erkennen läßt, kann untersucht werden, ob der Betrag der tatsächlichen Abweichung der funktionsspezifischen Größe von der Basisgröße eine zuvor festgelegte tolerierbare Abweichung überschreitet.

Beim als zweites genannten Verfahren nach der Erfindung kann die systemrelevante Meßgröße der Mediumdruck in der Armatur sein. Die armaturenrelevante Meßgröße kann der Hub des Schließorgans der Armatur sein. Schließlich kann die funktionsspezifische Größe der Hubfaktor der Armatur sein, der zuvor erläutert worden ist.

Beispielsweise wird bei beiden Verfahren eine tolerierbare Abweichung von der Basisgröße festgelegt und gespeichert. Danach wird überwacht, ob der Betrag der tatsächlichen Abweichung den Betrag der tolerierbaren Abweichung überschreitet. Dadurch werden geringfügige Abweichungen toleriert.

Die Aufgabe einer Einrichtung zur Prüfung einer durch ein Medium angetriebenen Armatur, die ein Schließorgan aufweist, anzugeben, wird gemäß der Erfindung einerseits dadurch gelöst, daß mit der Armatur mindestens ein erster Meßwertaufnehmer für einen zeitlichen Verlauf des Mediumdruckes in der Armatur und ein zweiter Meßwertaufnehmer für einen zeitlichen Verlauf des Hubes des Schließorgans verbunden sind, daß mit den Meßwertaufnehmern eine Auswerteeinheit zum Bestimmen des Hubfaktors als funktionsspezifische Größe in Verbindung steht, daß mit der Auswerteeinheit ein Speicher für eine Basisgröße verbunden ist und daß ein Subtrahierglied eingangsseitig mit dem Speicher und mit der Auswerteeinheit verbunden ist und ausgangsseitig mit einer Ausgabeeinheit in Verbindung steht.

Das Subtrahierglied ist beispielsweise mit einer als solchen bekannten Trendverfolgungseinheit verbunden, die mit der Ausgabeeinheit verbunden ist. Es wird damit eine Reihe aus denjenigen Abweichungen gebildet, die bei nacheinander durchgeführten Schaltvorgängen bestimmt worden sind. Wenn der Trend der Abweichungen zu größeren Abweichungen hingeht, werden die Abweichungen besonders genau auf ein Überschreiten der tolerierbaren Abweichung hin überwacht. Bei Überschreiten des Betrags der tolerierbaren Abweichung wird ein Fehler angezeigt. Eine zeitweilig erhöhte Abweichung führt nicht zu einer Fehleranzeige. Damit führt vorteilhafterweise ein möglicher Fehler der Prüfungseinrichtung nicht sofort zu einem Fehlersignal.

Die Aufgabe, eine Einrichtung zur Prüfung einer durch ein Medium angetriebenen Armatur, die ein Schließorgan ist, anzugeben, wird gemäß der Erfindung andererseits dadurch gelöst, daß mit der Armatur mindestens ein erster Meßwertaufnehmer für einen zeitlichen Verlauf einer systemrelevanten Meßgröße und ein zweiter Meßwertaufnehmer für einen zeitlichen Verlauf einer armaturenrelevanten Meßgröße verbunden sind, daß mit den Meßwertaufnehmern eine Auswerteeinheit zum Bestimmen mindestens einer funktionsspezifischen Größe in Verbindung steht, daß mit der Auswerteeinheit ein Speicher für eine Basisgröße verbunden ist, daß ein Subtrahierglied eingangsseitig mit dem Speicher und mit der Auswerteeinheit verbunden ist und daß das Subtrahierglied ausgangsseitig mit einer Trendverfolgungseinheit verbunden ist, die mit einer Auswerteeinheit verbunden ist.

Die Meßwertaufnehmer, die beispielsweise mit einem Meßwertaufbereiter verbunden sind, nehmen die zeitlichen Verläufe der Meßgrößen auf. Aus diesen zeitlichen Verläufen wird in der Auswerteeinheit eine funktionsspezifische Größe abgeleitet. Die Meßwertaufnehmer bzw. der Meßwertaufbereiter, die Auswerteeinheit und die Armatur stehen mit einer Steuereinheit in Verbindung. Dadurch ist sichergestellt, daß der zeitliche Verlauf einer Meßgröße während eines Schaltvorganges aufgenommen und dann einem bestimmten Schaltzustand der Armatur ein bestimmter Meßwert zugeordnet werden kann.

Die funktionsspezifische Größe für einen festgelegten Istzustand der Armatur wird im Speicher für die Basisgröße abgelegt. Wenn später zur Prüfung der Armatur die funktionsspezifische Größe in gleicher Weise bestimmt wird, wird der neue Wert im Subtrahierglied mit der Basisgröße verglichen. Bei einer Abweichung wird eine Ausgabeeinheit aktiviert, die einen Fehler in der Armatur anzeigt.

Der erste Meßaufnehmer kann ein Druckaufnehmer sein, der mit dem Innenraum eines Kolbengehäuses eines Antriebsteiles der Armatur verbunden ist. Das Medium in diesem Innenraum drückt auf einen Kolben, der mit dem Schließorgan, der Spindel der Armatur, die den Ventilteller trägt, verbunden ist. Durch den Mediumdruck wird die Spindel bewegt.

Der zweite Meßwertaufnehmer kann ein Wegaufnehmer sein, der zum Bestimmen des Hubes mit dem Schließorgan der Armatur, z.B. mit der Spindel, verbunden ist.

Beispielsweise ist das Subtrahierglied ausgangsseitig mit dem ersten Eingang eines Komparators verbunden, dessen zweiter Eingang mit einer Eingabeeinheit mit Speicher für eine tolerierbare Abweichung verbunden ist. Der Ausgang des Komparators ist mit der Ausgabeeinheit verbunden. Die tolerierbare Abweichung ist vor der Prüfung der Armatur festzulegen. Dadurch wird ausgeschlossen, daß geringfügige Abweichungen zu einem Fehlersignal führen.

Mit der Einrichtung nach der Erfindung wird wie mit dem Verfahren der Vorteil erzielt, daß eine durch ein Medium angetriebene Armatur zuverlässig und fortlaufend während des Betriebes überprüft werden kann, weil die erstgenannte Einrichtung die Überwachung des Hubfaktors als funktionsspezifische Größe vorsieht und die als zweite genannte Einrichtung eine Trendverfolgungseinheit aufweist.

Das Verfahren und die Einrichtung nach der Erfindung werden anhand der Zeichnung näher erläutert:
- Figur 1: zeigt eine Einrichtung gemäß der Erfindung zur Prüfung einer durch ein Medium angetriebenen Armatur.
- Figur 2: zeigt Druckverläufe des Antriebsmediums beim Öffnen und beim Schließen einer solchen Armatur und den Hubverlauf der Armatur.

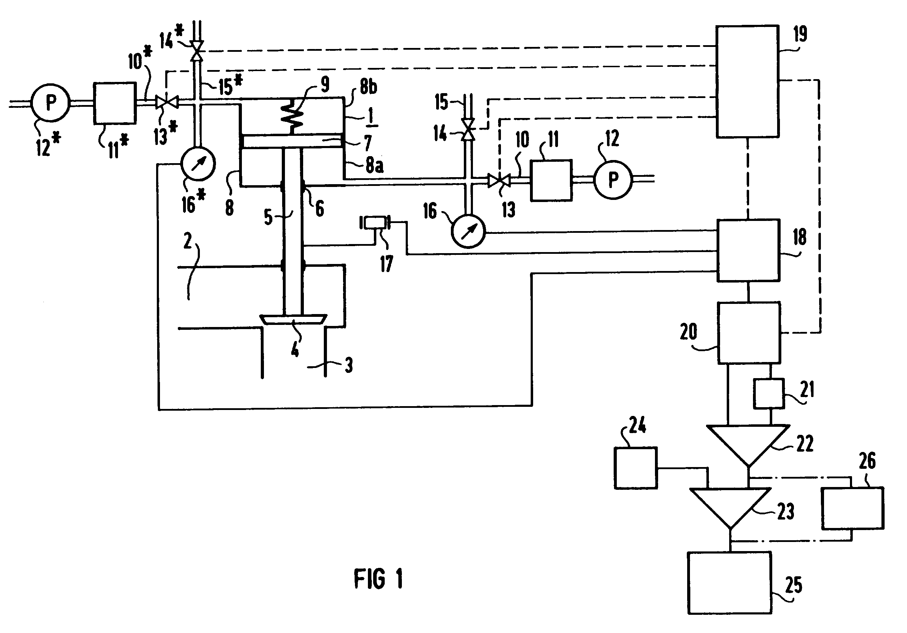

Figur 1 zeigt eine durch ein Medium angetriebene Armatur 1 mit einer Einlaßöffnung 2 und einer Auslaßöffnung 3. Die Auslaßöffnung 3 ist durch einen Ventilteller 4 verschließbar. Der Ventilteller 4 befindet sich am unteren Ende einer Spindel 5, die durch eine druckdichte Durchführung 6 hindurchgeführt ist und an ihrem oberen Ende mit einem Kolben 7 verbunden ist. Dieser ist in einem Kolbengehäuse 8 geführt, das den Kolben 7 seitlich eng umschließt. Zwischen dem Kolben 7 und der oberen Wand des Kolbengehäuses 8 kann eine mechanische Feder 9 derart angeordnet sein, daß sie auf den Kolben 7 und damit auf die Spindel 5 und auf den Ventilteller 4 eine Kraft einwirken läßt, die die Armatur 1 geschlossen hält, sofern keine anderen Kräfte einwirken. Zum Antrieb der Armatur 1 ist der als unterer Teil 8a bezeichnete Raum des Kolbengehäuses 8 unterhalb des Kolbens 7 mit einer Zuführleitung 10 für ein Antriebsmedium verbunden. Zum Öffnen der Armatur 1 steht ein Druckspeicher 11 mit Pumpe 12 bzw. Kompressor über ein Ventil 13 mit der Leitung 10 in Verbindung. Mit der Pumpe 12 wird ein Antriebsmedium gefördert. Dieses Antriebsmedium kann ein Gas oder eine Flüssigkeit sein. Beispielsweise kann Luft als Antriebsmedium dienen. Wenn der Druckspeicher 11 in Betrieb und das Ventil 13 geöffnet sind, strömt das Antriebsmedium in den unteren Teil 8a des Kolbengehäuses 8 hinein und hebt den Kolben 7 gegen die Kraft der mechanischen Feder 9 an. Dadurch wird auch der Ventilteller 4 angehoben und die Armatur 1 wird geöffnet. Wenn die Armatur 1 wieder geschlossen werden soll, wird bei geschlossenem Ventil 13 ein Entlastungsventil 14 in einer vom unteren Teil 8a des Kolbengehäuses 8 ausgehenden Medium-Ableitung 15 geöffnet. Das Antriebsmedium kann dann das Kolbengehäuse 8 verlassen. Mit abnehmendem Druck im Kolbengehäuse 8 überwiegt die Krafteinwirkung der mechanischen Feder 9 auf den Kolben 7 und der Ventilteller 4 wird nach unten bewegt bis die Armatur 1 geschlossen ist.

Es gibt Armaturen 1, die ohne Feder 9 für die Schließkraft auskommen. Bei einer solchen Armatur 1 wird auch der als oberer Teil 8b bezeichnete Raum des Kolbengehäuses 8 oberhalb des Kolbens 7 mit dem Antriebsmedium beaufschlagt. Dieser Raum ist dazu mit einer eigenen Zuführleitung 10* für das Antriebsmedium verbunden.

Zum Schließen der Armatur 1 steht ein Druckspeicher 11* mit Pumpe 12* bzw. Kompressor über ein Ventil 13* mit der Leitung 10* in Verbindung. Wenn der Druckspeicher 11* in Betrieb und das Ventil 13* geöffnet sind, strömt das Antriebsmedium in den oberen Teil 8b des Kolbengehäuses 8 hinein und drückt den Kolben 7 zusammen mit der Spindel 5 und dem Ventilteller 4 nach unten bis die Armatur 1 geschlossen ist. Dabei sollte der Raum unterhalb des Kolbens 7 über die Medium-Ableitung 15 geöffnet sein. Wenn die Armatur wieder geschlossen werden soll, wird bei geschlossenem Ventil 13* ein Entlastungsventil 14* in einer vom oberen Teil 8b des Kolbengehäuses 8 ausgehenden Medium-Ableitung 15* geöffnet. Das Antriebsmedium kann dann den Raum oberhalb des Kolbens 7 verlassen. Wenn gleichzeitig in den Raum unterhalb des Kolbens 7 ein Antriebsmedium eingespeist wird, öffnet die Armatur 1.

Zum Messen des Druckes P₁ des Antriebsmediums im unteren Teil 8a des Kolbengehäuses 8 ist mit diesem Raum ein Druckaufnehmer 16 verbunden. Ein entsprechender Druckaufnehmer 16* kann zum Messen des Drucks P₂ des Antriebsmediums im oberen Teil 8b des Kolbengehäuses 8 mit diesem Raum verbunden sein.

Zur laufenden Messung der Position eines Schließorgans, z.B. der Spindel 5 der Armatur 1, also des Hubes H, ist mit der Spindel 5 ein Wegaufnehmer 17 verbunden. Dieser kann ein induktiver Wegaufnehmer 17 sein. Die Druckaufnehmer 16, 16* und der Wegaufnehmer 17 stehen mit einem Meßwertaufbereiter 18 für den zeitlichen Verlauf des Mediumdruckes P₁, P₂ und des Hubes H der Spindel 5 während eines Öffnungsvorganges und/oder während eines Schließvorganges der Armatur 1 in Verbindung. Zur exakten Erfassung der Druckverläufe P₁, P₂ und des Hubverlaufs H ist der Meßwertaufbereiter 18 mit einer Steuereinheit 19 verbunden, die auch mit den Ventilen 13, 14 und 13*, 14* verbunden ist. Der Druck P₁, P₂ im Kolbengehäuse 8 ist eine systemrelevante Meßgröße. Der Hub H der Spindel 5 ist eine armaturenrelevante Größe. Dem Meßwertaufbereiter 18 ist eine Auswerteeinheit 20 nachgeschaltet, die auch mit der Steuereinheit 19 in Verbindung steht. In der Auswerteeinheit 20 wird aus einem Verlauf des Druckes P₁, P₂ und dem Hubverlauf H eine funktionsspezifische Größe, beispielsweise der Hubfaktor Pd/Pc, Pi/Ph abgeleitet.

Der als Basisgröße in einem fehlerfreien Zustand der Armatur 1 in der Auswerteeinheit 20 bestimmte Wert für die funktionsspezifische Größe wird in einem Speicher 21 für die Basisgröße abgespeichert. Der Speicher 21 ist dazu mit der Auswerteeinheit 20 verbunden. Zum Vergleich späterer Messungen mit der Basisgröße steht die Auswerteeinheit 20 außerdem mit einem Eingang eines Subtrahierglieds 22 in Verbindung, dessen anderer Eingang mit dem Speicher 21 verbunden ist. Am Ausgang des Subtrahiergliedes 22 steht die jeweilige Abweichung einer gemessenen Größe von der Basisgröße an. Dem Subtrahierglied 22 kann ein Eingang eines Komparators 23 nachgeschaltet sein, an dessen anderem Eingang eine Eingabeeinheit 24 für den Wert einer tolerierbaren Abweichung angeschlossen ist. Falls der Betrag der gemessenen Abweichung die tolerierbare Abweichung übertrifft, steht am Ausgang des Komparators 23 ein Signal an. Der Ausgang des Komparators 23 ist mit einer Ausgabeeinheit 25 für das Signal verbunden.

Zusätzliche Ausgabeeinheiten können Bestandteil des Meßwertaufnehmers 18, der Auswerteeinheit 20 und/oder des Subtrahiergliedes 22 sein.

Zwischen dem Subtrahierglied 22 und der Ausgabeeinheit 25 kann eine Trendverfolgungseinheit 26 zwischengeschaltet sein. In der Trendverfolgungseinheit 26 wird aus den nacheinander eintreffenden Abweichungswerten eine Reihe gebildet und der Trend dieser Reihe verfolgt. Falls der Trend zu immer größeren Abweichungen hingeht, wird ein Signal an die Ausgabeeinheit 25 abgegeben, woraufhin der Ausgang des Komparators 23 genauer überwacht werden kann.

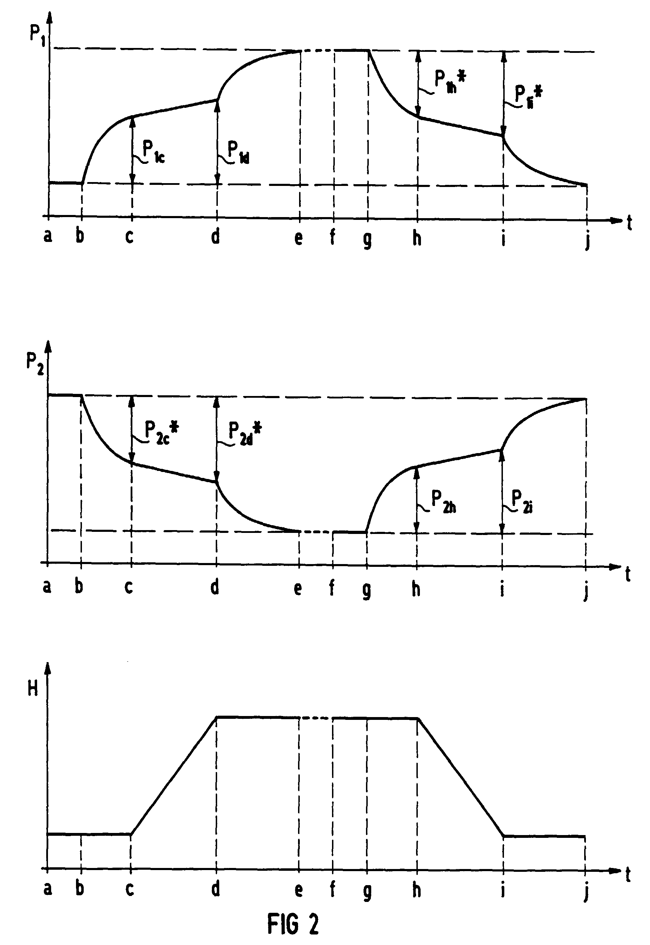

In Figur 2 sind der zeitliche Verlauf des Hubes H eines Öffnungsvorganges und eines Schließvorganges einer durch ein Medium angetriebenen Armatur 1 und der Verlauf des Mediumdruckes P₁, P₂ dargestellt. Dabei ist P₁ ein Druck im unteren Teil 8a des Kolbengehäuses (unterhalb des Kolbens 7), der in Öffnungsrichtung wirkt, und P₂ ist ein Druck im oberen Teil 8b des Kolbengehäuses 8 (oberhalb des Kolbens 7), der in Schließrichtung der Armatur 1 wirkt. Der Druck P₁ wird am Druckaufnehmer 16, der Druck P₂ am Druckaufnehmer 16* gemessen.

Beim Öffnungsvorgang (Hubverlauf H) einer durch ein Medium angetriebenen Armatur 1 erfolgt zum Zeitpunkt a die Öffnung des Ventils 13 in der Medium-Zuführleitung 10. Damit wird der Antriebskolben 7 von unten mit dem Medium beaufschlagt. Erst zum späteren Zeitpunkt b beginnt der Druck P₁ im unteren Teil 8a des Kolbengehäuses 8 meßbar zu steigen (Druckverlauf P₁) Die Zeitspanne zwischen den Zeitpunkten a und b wird mit "Totzeit Druckbeginn" bezeichnet. Erst zu einem noch späteren Zeitpunkt c beginnt die Bewegung des Kolbens 7, der Spindel 5 und des Ventiltellers 4. Den Zeitraum zwischen den Zeitpunkten a und c bezeichnet man als "Totzeit Hubbeginn". Während sich die Spindel 5 bewegt, steigt der Druck im unteren Teil 8a des Kolbengehäuses 8 nur langsam an. Der Öffnungsvorgang der Armatur 1 ist zum Zeitpunkt d abgeschlossen. Danach steigt der Druck bei geöffneter Armatur 1 zunächst stärker, aber dann abnehmend an bis er einen höchsten Wert zum Zeitpunkt e erreicht. Die Druckänderung erstreckt sich also über den Zeitraum von b bis e (Druckverlauf P₁), während die Bewegung der Spindel 5 sich nur über den Zeitraum c bis d (Hubverlauf H) erstreckt.

Beim Schließvorgang der Armatur 1 zeigt sich der folgende Druckverlauf im unteren Teil 8a des Kolbengehäuses 8:

Zum Zeitpunkt f wird die Druckentlastung des Kolbens 7 (Druckverlauf P₁), z.B. durch das Öffnen eines Entlastungsventils 14, eingeleitet. Ein Druckabfall ist erst ab dem späteren Zeitpunkt g bemerkbar. Nach dem Zeitpunkt g fällt der Druck relativ schnell ab. Die Schließbewegung des Kolbens 7, der Spindel 5 und des Ventiltellers 4 beginnt jedoch erst zum Zeitpunkt h (Hubverlauf H). Der Zeitraum zwischen den Zeitpunkten f und g ist die "Totzeit Druckbeginn" und der Zeitraum zwischen den Zeitpunkten f und h ist die "Totzeit Schließbeginn". Nach dem Zeitpunkt h werden die Spindel 5 und damit der Ventilteller 4 der Armatur 1 bewegt bis die Armatur 1 zum Zeitpunkt i geschlossen ist. Während des Schließvorganges zwischen den Zeitpunkten h und i geht der Druck nur geringfügig zurück. Nach dem Zeitpunkt i fällt der Druck bei geschlossener Armatur 1 bis zum Zeitpunkt j auf seinen niedrigsten Wert ab.

Im Raum 8b oberhalb des Kolbens 7 zeigt sich im Kolbengehäuse 8 ein Druckverlauf P₂, falls auch von dort statt durch eine Feder 9 durch ein Medium eine Kraft auf den Kolben 7 ausgeübt wird.

Der Druckverlauf P₂ zwischen den Zeitpunkten a und e entspricht dem Druckverlauf P₁ zwischen den Zeitpunkten f und j.

Während beim Öffnen der Armatur 1 im unteren Teil 8a des Kolbengehäuses 8 ein Mediumdruck P₁ aufgebaut wird, muß im oberen Teil 8b ein Mediumdruck P₂ abgebaut werden.

Beim Schließen der Armatur 1 wird im unteren Teil 8a ein Mediumdruck P₁ abgebaut und im oberen Teil 8b ein Mediumdruck P₂ aufgebaut. Der Druckverlauf P₂ zwischen den Zeitpunkten f und j entspricht dem Druckverlauf P₁ zwischen den Zeitpunkten a und e.

Ein solcher Druckverlauf P₁, P₂ für einen Öffnungsvorgang und für einen Schließvorgang der Armatur 1 wird als Istzustand aufgenommen. Ein Druckverlauf P₁, P₂ im Kolbengehäuse 8 ist eine systemrelevante Meßgröße. Der Hubverlauf H ist eine armaturenrelevante Meßgröße. Ein Fehler in der Armatur 1 muß, da der Mediumdruck die Antriebsgröße der Armatur 1 ist, stets Auswirkungen auf den beschriebenen Druckverlauf P₁, P₂ haben. Der Druckverlauf P₁, P₂ und der Hubverlauf H können während jeder Betätigung der Armatur 1 gemessen werden, ohne daß ein Eingriff in die Funktionsweise der Armatur 1 erforderlich wäre. Es sind keine Meßwertgeber an der Armatur 1 erforderlich, die die Arbeitsweise der Armatur 1 behindern könnten. Ein Druckaufnehmer 16, 16* und ein Wegaufnehmer 17 behindern die Arbeitsweise der Armatur 1 nicht.

Schon der Druckverlauf P₁, P₂ kann einen Hinweis auf die Funktionsfähigkeit der Armatur 1 geben. Zur besseren Überwachung des Druckverlaufes P₁, P₂ werden nicht Druckverläufe, sondern charakteristische Druckwerte oder Druckdifferenzen aus verschiedenen Messungen miteinander verglichen. Diese Werte oder Wertedifferenzen sind funktionsspezifische Größen, die unmittelbar einen Hinweis auf den Zustand der Armatur 1 geben.

Eine mögliche funktionsspezifische Größe ist der Hubfaktor. Beim Öffnen der Armatur 1 ist er bestimmt durch den Quotient aus dem Druckanstieg P_{1d} im unteren Teil 8a des Kolbengehäuses 8 am Ende des Hubvorganges (Zeitpunkt d) und dem Druckanstieg P_{1c} dort beim Beginn des Hubvorganges (Zeitpunkt c). Beim Schließvorgang der Armatur 1 ist der Hubfaktor bestimmt durch den Quotient aus der Druckabnahme P_{1i*} bis zum Ende des Schließvorganges (Zeitpunkt i) und der Druckabnahme P_{1h*} bis zum Beginn des Schließvorganges (Zeitpunkt h). Eine deutliche Änderung des Hubfaktors läßt auf einen Fehler in der Armatur 1 schließen. Der Hubfaktor kann bei jedem Öffnungsoder Schließvorgang der Armatur 1 bestimmt werden. Es ist dann eine fortlaufende Überwachung möglich.

Andere funktionsspezifische Größen können Druckwerte zu den genannten Zeitpunkten, Druckdifferenzen zwischen zwei Zeitpunkten oder auch Zeitspannen zwischen zwei Zeitpunkten sein.

Funktionsspezifische Größen können in entsprechender Weise auch aus dem Hubverlauf H und aus dem Druckverlauf P₂ im oberen Teil 8b des Kolbengehäuses 8 bestimmt werden. Der Hubfaktor beim Öffnen der Armatur 1 ist bestimmt durch den Quotient aus der Druckabnahme P_{2d*} bis zum Ende des Hubvorganges (Zeitpunkt d) und der Druckabnahme P_{2c*} bis zum Beginn des Hubvorgangs (Zeitpunkt c).
Beim Schließvorgang der Armatur 1 ist der Hubfaktor bestimmt durch den Quotient aus dem Druckanstieg P₂ᵢ am Ende des Schließvorgangs (Zeitpunkt i) und dem Druckanstieg P₂ₕ beim Beginn des Schließvorgangs (Zeitpunkt h).

Mit dem Verfahren und mit der Einrichtung nach der Erfindung kann im laufenden Betrieb der Armatur 1 ein Fehler zuverlässig erkannt werden, weil eine funktionsspezifische Größe überwacht wird.

## Patentansprüche

1. Verfahren zur Prüfung einer durch ein Medium angetriebenen Armatur (1), die ein Schließorgan aufweist, insbesondere einer pneumatisch oder hydraulisch angetriebenen und/oder eigenmediumgesteuerten Armatur (1), wobei während eines Schaltvorgangs der Armatur (1) als Istzustand die zeitlichen Verläufe einer systemrelevanten und einer armaturenrelevanten Meßgröße gemessen werden,
**dadurch gekennzeichnet,** daß aus den zeitlichen Verläufen eines Mediumdruckes (P₁, P₂) in der Armatur (1) als systemrelevante Meßgröße und eines Hubes (H) des Schließorgans der Armatur (1) als armaturenrelevante Meßgröße ein Hubfaktor der Armatur (1) als funktionsspezifische Größe abgeleitet und als Basisgröße gespeichert wird, der ein Quotient aus zwei Mediumdrücken, die für zwei Stellungen des Schließorgans (Hübe) bestimmt worden sind, ist, daß während eines späteren Schaltvorgangs der Armatur (1) der Hubfaktor in gleicher Weise erneut bestimmt und dessen Abweichung von der gespeicherten Basisgröße überwacht wird.

2. Verfahren nach Anspruch 1,
**dadurch gekennzeichnet,** daß für mehrere nacheinander erfolgende Schaltvorgänge jeweils die Abweichung des Hubfaktors von der zugeordneten Basisgröße bestimmt wird und daß der Trend der Abweichungen überwacht wird.

3. Verfahren zur Prüfung einer durch ein Medium angetriebenen Armatur (1), insbesondere einer pneumatisch oder hydraulisch angetriebenen und/oder eigenmediumgesteuerten Armatur (1), wobei während eines Schaltvorgangs der Armatur (1) als Istzustand die zeitlichen Verläufe einer systemrelevanten und einer armaturenrelevanten Meßgröße gemessen werden,
**dadurch gekennzeichnet,** daß aus den zeitlichen Verläufen mindestens eine funktionsspezifische Größe abgeleitet und als Basisgröße gespeichert wird, daß für mehrere, spätere nacheinander erfolgende Schaltvorgänge der Armatur (1) jeweils die Abweichung mindestens einer bestimmten funktionsspezifischen Größe von der zugeordneten Basisgröße bestimmt wird und daß der Trend der Abweichungen überwacht wird.

4. Verfahren nach Anspruch 3,
**dadurch gekennzeichnet,** daß eine systemrelevante Meßgröße der Mediumdruck (P₁, P₂) in der Armatur (1) ist.

5. Verfahren nach einem der Ansprüche 2, 3 oder 4,
**dadurch gekennzeichnet,** daß die armaturenrelevante Meßgröße der Hub (H) des Schließorgans der Armatur (1) ist.

6. Verfahren nach einem der Ansprüche 3 bis 5,
**dadurch gekennzeichnet,** daß eine funktionsspezifische Größe der Hubfaktor der Armatur (1) ist.

7. Verfahren nach einem der Ansprüche 1 bis 6,
**dadurch gekennzeichnet,** daß eine tolerierbare Abweichung von der Basisgröße festgelegt und gespeichert wird und daß der Betrag der tatsächlichen Abweichung auf Überschreitung des Betrags der tolerierbaren Abweichung automatisch überwacht wird.

8. Einrichtung zur Prüfung einer durch ein Medium angetriebenen Armatur (1), die ein Schließorgan aufweist, insbesondere einer pneumatisch oder hydraulisch angetriebenen und/oder eigenmediumgesteuerten Armatur (1),
**dadurch gekennzeichnet,** daß mit der Armatur (1) mindestens ein erster Meßwertaufnehmer (16) für einen zeitlichen Verlauf des Mediumdruckes (P₁, P₂) in der Armatur (1) und ein zweiter Meßwertaufnehmer (17) für einen zeitlichen Verlauf des Hubes (H) des Schließorgans verbunden sind, daß mit den Meßwertaufnehmern (16, 17) eine Auswerteeinheit (20) zum Bestimmen des Hubfaktors als funktionsspezifische Größe in Verbindung steht, daß mit der Auswerteeinheit (20) ein Speicher (21) für eine Basisgröße verbunden ist und daß ein Subtrahierglied (22) eingangsseitig mit dem Speicher (21) und mit der Auswerteeinheit (20) verbunden ist und ausgangsseitig mit einer Ausgabeeinheit (25) in Verbindung steht.

9. Einrichtung nach Anspruch 8,
**dadurch gekennzeichnet,** daß das Subtrahierglied (22) mit einer Trendverfolgungseinheit (26) verbunden ist, die mit der Ausgabeeinheit (25) verbunden ist.

10. Einrichtung zur Prüfung einer durch ein Medium angetriebenen Armatur (1), die ein Schließorgan aufweist, insbesondere einer pneumatisch oder hydraulisch angetriebenen und/oder eigenmediumgesteuerten Armatur (1),
**dadurch gekennzeichnet,** daß mit der Armatur (1) mindestens ein erster Meßwertaufnehmer (16) für einen zeitlichen Verlauf einer systemrelevanten Meßgröße und ein zweiter Meßwertaufnehmer (17) für einen zeitlichen Verlauf einer armaturenrelevanten Meßgröße verbunden sind, daß mit den Meßwertaufnehmern (16, 17) eine Auswerteeinheit (20) zum Bestimmen mindestens einer funktionsspezifischen Größe in Verbindung steht, daß mit der Auswerteeinheit (20) ein Speicher (21) für eine Basisgröße verbunden ist, daß ein Subtrahierglied (22) eingangsseitig mit dem Speicher (21) und mit der Auswerteeinheit (20) verbunden ist und daß das Subtrahierglied (22) ausgangsseitig mit einer Trendverfolgungseinheit (26) verbunden ist, die mit einer Ausgabeeinheit (25) verbunden ist.

11. Einrichtung nach einem der Ansprüche 8 bis 10,
**dadurch gekennzeichnet,** daß die Meßwertaufnehmer (16, 17) mit einem Meßwertaufbereiter (18) verbunden sind, der mit der Auswerteeinheit (20) verbunden ist.

12. Einrichtung nach einem der Ansprüche 8 bis 11,
**dadurch gekennzeichnet,** daß der erste Meßwertaufnehmer ein Druckaufnehmer (16, 16*) ist, der mit dem Innenraum eines Kolbengehäuses (8) eines Antriebsteiles der Armatur (1) verbunden ist.

13. Einrichtung nach einem der Ansprüche 8 bis 12,
**dadurch gekennzeichnet,** daß der zweite Meßwertaufnehmer ein Wegaufnehmer (17) ist, der mit einem Schließorgan der Armatur (1) verbunden ist.

14. Einrichtung nach einem der Ansprüche 8 bis 13,
**dadurch gekennzeichnet,** daß das Subtrahierglied (22) ausgangsseitig mit dem ersten Eingang eines Komparators (23) verbunden ist, dessen zweiter Eingang mit einer Eingabeeinheit (24) mit Speicher für eine tolerierbare Abweichung verbunden ist, und daß der Ausgang des Komparators (23) mit der Ausgabeeinheit (25) verbunden ist.

## Claims

1. Process for testing a fitting (1) operated by a medium, which fitting has a closing means, in particular a fitting (1) which is pneumatically or hydraulically operated and/or controlled by its own medium, wherein, during a switching operation of the fitting (1), as the actual condition, the time characteristics of a measured variable relevant to the system and of a measured variable relevant to the fitting are measured, **characterised in that** a stroke factor of the fitting (1) is derived as the function-specific variable from the time characteristics of a medium pressure (P₁, P₂) in the fitting (1) as the measured variable relevant to the system and of a stroke (H) of the closing means of the fitting (1) as the measured variable relevant to the fitting, and is stored as a base variable, which stroke factor is a quotient formed by two medium pressures that have been determined for two positions of the closing means (strokes), in that, during a subsequent switching operation of the fitting (1), the stroke factor is determined again in the same way and its deviation from the stored base variable is monitored.

2. Process according to claim 1, **characterised in that,** for several successive switching operations, the respective deviation of the stroke factor from the associated base variable is determined and in that the trend of the deviations is monitored.

3. Process for testing a fitting (1) operated by a medium, in particular a fitting (1) which is pneumatically or hydraulically operated and/or controlled by its own medium, wherein, during a switching operation of the fitting (1), as the actual condition, the time characteristics of a measured variable relevant to the system and of a measured variable relevant to the fitting are measured, **characterised in that** at least one function-specific variable is derived from the time characteristics and stored as a base variable, in that, for several subsequent successive switching operations of the fitting (1), the respective deviation of at least one function-specific variable from the associated base variable is determined and in that the trend of the deviations is monitored.

4. Process according to claim 3, **characterised in that** the medium pressure (P₁, P₂) in the fitting (1) is a measured variable relevant to the system.

5. Process according to one of claims 2, 3 or 4, **characterised in that** the measured variable relevant to the fitting (1) is the stroke (H) of the closing means of the fitting (1).

6. Process according to one of claims 3 to 5, **characterised in that** the stroke factor of the fitting (1) is a function-specific variable.

7. Process according to one of claims 1 to 6, **characterised in that** a tolerable deviation from the base variable is determined and stored and in that the magnitude of the actual deviation is automatically monitored for exceeding the magnitude of the tolerable deviation.

8. Device for testing a fitting (1) operated by a medium, which fitting has a closing means, in particular a fitting (1) which is pneumatically or hydraulically operated and/or controlled by its own medium, **characterised in that** at least a first measuring sensor (16) for a time characteristic of the medium pressure (P₁, P₂) in the fitting (1) and a second measuring sensor (17) for a time characteristic of the stroke (H) of the closing means are connected to the fitting (1), in that an analyzing unit (20) for determining the stroke factor as a function-specific variable is connected to the measuring sensors (16, 17), in that a memory (21) for a base variable is connected to the analyzing unit (20), and in that a subtracting element (22) is connected on the input side to the memory (21) and to the analyzing unit (20) and on the output side to an output unit (25).

9. Device according to claim 8, **characterised in that** the subtracting element (22) is connected to a trend following unit (26), which is connected to the output unit (25).

10. Device for testing a fitting (1) operated by a medium, which fitting has a closing means, in particular a fitting (1) which is pneumatically or hydraulically operated and/or controlled by its own medium, **characterised in that** at least a first measuring sensor (16) for a time characteristic of a measured variable relevant to the system and a second measuring sensor (17) for a time characteristic of a measured variable relevant to the fitting are connected to the fitting (1), in that an analyzing unit (20) for determining at least one function-specific variable is connected to the measuring sensors (16, 17), in that a memory (21) for a base variable is connected to the analyzing unit (20), in that a subtracting element (22) is connected on the input side to the memory (21) and to the analyzing unit (20), and in that the subtracting element (22) is connected on the output side to a trend following unit (26), which is connected to an output unit (25).

11. Device according to one of claims 8 to 10, **characterised in that** the measuring sensors (16, 17) are connected to a measured value pre-processor (18), which is connected to the analyzing unit (20).

12. Device according to one of claims 8 to 11, **characterised in that** the first measuring sensor is a pressure sensor (16, 16*) which is connected to the interior of a piston housing (8) of a driving part of the fitting (1).

13. Device according to one of claims 8 to 12, **characterised in that** the second measuring sensor is a displacement sensor (17) which is connected to a closing means of the fitting (1).

14. Device according to one of claims 8 to 13, **characterised in that** the subtracting element (22) is connected on the output side to the first input of a comparator (23) whose second input is connected to an input unit (24) having a memory for a tolerable deviation, and in that the output of the comparator (23) is connected to the output unit (25).

## Revendications

1. Procédé visant à vérifier une garniture (1) actionnée par un milieu, qui présente un organe de fermeture, en particulier une garniture (1) actionnée de façon pneumatique ou hydraulique et / ou commandée par son propre fluide, dans lequel pendant une opération de commutation de la garniture (1) en tant qu'état réel les variations dans le temps d'une grandeur de mesure relative au système et d'une grandeur de mesure relative à la garniture sont mesurées, caractérisé en ce que à partir des variations dans le temps d'une pression du milieu (P₁, P₂) dans la garniture (1) en tant que grandeur de mesure relative au système et d'une course (H) de l'organe de fermeture de la garniture (1) en tant que grandeur de mesure relative à la garniture, un facteur de course de la garniture (1) est dérivé comme grandeur spécifique de la fonction et est mémorisé comme grandeur de base, qui est un quotient tiré de deux pressions du milieu, qui ont été déterminées pour deux positions de l'organe de fermeture (courses), en ce que pendant une opération de commutation ultérieure de la garniture (1) le facteur de course est déterminé à nouveau de la même manière et son écart avec la grandeur de base mémorisée est surveillé.

2. Procédé selon la revendication 1, caractérisé en ce que pour plusieurs opérations de commutation se produisant l'une après l'autre, à chaque fois l'écart du facteur de course de la grandeur de base associée est déterminé et en ce que la tendance des écarts est surveillée.

3. Procédé visant à vérifier une garniture (1) actionnée par un milieu, en particulier une garniture (1) actionnée de façon pneumatique ou hydraulique et / ou commandée par son propre fluide, dans lequel pendant une opération de commutation de la garniture (1) en tant qu'état réel les variations dans le temps d'une grandeur de mesure relative au système et d'une grandeur de mesure relative à la garniture sont mesurées, caractérisé en ce que à partir des variations dans le temps est dérivée au moins une grandeur spécifique de la fonction et est enregistrée comme grandeur de base, en ce que pour plusieurs opérations de commutation ultérieures, se produisant les unes après les autres, de la garniture (1) à chaque fois l'écart d'au moins une grandeur spécifique de la fonction avec la grandeur de base associée est déterminé et en ce que la tendance des écarts est surveillée.

4. Procédé selon la revendication 3, caractérisé en ce qu'une grandeur de mesure relative au système est la pression du milieu (P₁, P₂) dans la garniture (1).

5. Procédé selon l'une des revendications 2, 3 ou 4, caractérisé en ce que la grandeur de mesure relative à la garniture est la course (H) de l'organe de fermeture de la garniture (1).

6. Procédé selon l'une des revendications 3 à 5, caractérisé en ce qu'une grandeur spécifique de la fonction est le facteur de course de la garniture (1).

7. Procédé selon l'une des revendications 1 à 6, caractérisé en ce qu'un écart tolérable avec la grandeur de base est fixé et mémorisé et en ce que la valeur de l'écart effectif est automatiquement surveillée quant au dépassement de la valeur de l'écart tolérable.

8. Dispositif visant à vérifier une garniture (1) actionnée par un milieu, qui présente un organe de fermeture, en particulier une garniture (1) actionnée de façon pneumatique ou hydraulique et / ou commandée par son propre fluide, caractérisé en ce qu'au moins un premier transducteur (16) pour une variation dans le temps de la pression du milieu (P₁, P₂) dans la garniture (1) et un deuxième transducteur (17) pour une variation dans le temps de la course (H) de l'organe de fermeture sont reliés à la garniture (1), en ce qu'une unité d'évaluation (20) destinée à déterminer le facteur de course en tant que grandeur spécifique de la fonction est en relation avec les transducteurs (16, 17), en ce qu'une mémoire (21) pour une grandeur de base est reliée à l'unité d'évaluation (20) et en ce qu'un élément soustracteur (22) est relié du côté de l'entrée à la mémoire (21) et à l'unité d'évaluation (20) et est en relation du côté de la sortie avec une unité de sortie (25).

9. Dispositif selon la revendication 8, caractérisé en ce que l'élément soustracteur (22) est relié à une unité de poursuite de tendance (26), qui est reliée à l'unité de sortie (25).

10. Dispositif visant à vérifier une garniture (1) actionnée par un milieu, qui présente un organe de fermeture, en particulier une garniture (1) actionnée de façon pneumatique ou hydraulique et / ou commandée par son propre fluide, caractérisé en ce qu'au moins un premier transducteur (16) pour une variation dans le temps d'une grandeur de mesure relative au système et un deuxième transducteur (17) pour une variation dans le temps d'une grandeur de mesure relative à la garniture sont reliés à la garniture (1), en ce qu'une unité d'évaluation (20) destinée à déterminer au moins une grandeur spécifique de la fonction est en relation avec les transducteurs (16, 17), en ce qu'une mémoire (21) pour une grandeur de base est reliée à l'unité d'évaluation (20), en ce qu'un élément soustracteur (22) est relié du côté de l'entrée à la mémoire (21) et à l'unité d'évaluation (20) et en ce que l'élément soustracteur (22) est relié du côté de la sortie à une unité de poursuite de tendance (26), qui est reliée à une unité de sortie (25).

11. Dispositif selon l'une des revendications 8 à 10, caractérisé en ce que les transducteurs (16, 17) sont reliés à un préparateur des valeurs de mesure (18), qui est relié à l'unité d'évaluation (20).

12. Dispositif selon l'une des revendications 8 à 11, caractérisé en ce que le premier transducteur est un capteur de pression (16, 16*), qui est relié à l'espace intérieur d'un boîtier de piston (8) d'une pièce motrice de la garniture (1).

13. Dispositif selon l'une des revendications 8 à 12, caractérisé en ce que le deuxième transducteur est un capteur de déplacement (17), qui est relié à un organe de fermeture de la garniture (1).

14. Dispositif selon l'une des revendications 8 à 13, caractérisé en ce que l'élément soustracteur (22) est relié du côté de la sortie à la première entrée d'un comparateur (23), dont la deuxième entrée est reliée à une unité d'entrée (24) avec mémoire pour un écart tolérable, et en ce que la sortie du comparateur (23) est reliée à l'unité de sortie (25).
